# EUROPEAN PATENT SPECIFICATION

(11) **EP 4 599 398 B1**
(45) Date of publication and mention of the grant of the patent: **12.08.2026**
(21) Application number: 23806140.2
(22) Date of filing: 19.10.2023
(51) Int. Cl.: G06T 7/00

(54) **SYSTEM AND METHOD FOR JOINT DETECTION, LOCALIZATION, SEGMENTATION AND CLASSIFICATION OF ANOMALIES IN IMAGES**
SYSTEM UND VERFAHREN ZUR GEMEINSAMEN ERKENNUNG, LOKALISIERUNG, SEGMENTIERUNG UND KLASSIFIZIERUNG VON ANOMALIEN IN BILDERN
SYSTÈME ET MÉTHODE POUR LA DÉTECTION, LA LOCALISATION, LA SEGMENTATION ET LA CLASSIFICATION CONJOINTES D'ANOMALIES DANS DES IMAGES

(30) Priority: 11.11.2022 US 202263383310 P
(43) Date of publication of application: 13.08.2025
(73) Proprietor: Siemens Corporation, Washington DC 20001 (US)
(72) Inventor: ROY, Aditi, Plainsboro, New Jersey 08536 (US)
(74) Representative: HKW Intellectual Property PartG mbB
(86) International application number: PCT/US2023/077244
(87) International publication number: WO 2024/102565

(56) References cited:
- SHASHANKA VENKATARAMANAN ET AL: "Attention Guided Anomaly Localization in Images", ARXIV.ORG, CORNELL UNIVERSITY LIBRARY, 201 OLIN LIBRARY CORNELL UNIVERSITY ITHACA, NY 14853, 19 November 2019 (2019-11-19), XP081626372
- KANEZAKI ASAKO: "Unsupervised Image Segmentation by Backpropagation", 2018 IEEE INTERNATIONAL CONFERENCE ON ACOUSTICS, SPEECH AND SIGNAL PROCESSING (ICASSP), IEEE, 15 April 2018 (2018-04-15), pages 1543 - 1547, XP033401797, DOI: 10.1109/ICASSP.2018.8462533
- JAKE SNELL ET AL: "Prototypical Networks for Few-shot Learning", 19 June 2017 (2017-06-19), XP055584971, Retrieved from the Internet <URL:https://arxiv.org/pdf/1703.05175.pdf> [retrieved on 20190502]
- DESHPANDE SOURABH ET AL: "Smart monitoring and automated real-time visual inspection of a sealant applications (SMART-VIStA)", MANUFACTURING LETTERS, vol. 35, 1 August 2023 (2023-08-01), NL, pages 1134 - 1145, XP093121515, ISSN: 2213-8463, Retrieved from the Internet <URL:https://www.sciencedirect.com/science/article/pii/S2213846323001761/pdfft?md5=792435ec3f94daab42a127541e524b2f&pid=1-s2.0-S2213846323001761-main.pdf> DOI: 10.1016/j.mfglet.2023.08.115

## Description

### STATEMENT REGARDING FEDERALLY SPONSORED DEVELOPMENT

Development for this invention was supported in part by Technology Investment Agreement number W15QKN-19-3-0003 awarded by US Army Contracting Command-Picatinny, that operates under the U.S. Department of Defense. Accordingly, the United States Government may have certain rights in this invention.

### TECHNICAL FIELD

The present disclosure relates to applying artificial intelligence to visual inspection systems. In particular, disclosed embodiments relate to a deep learning-based solution for joint detection, localization, segmentation and classification of anomalies in images within industrial settings with scarce labeled data.

### BACKGROUND

Deep learning models for computer vision typically require a large amount of labeled data for training. However, in industrial applications, such as in visual quality inspection of manufactured parts, acquiring sufficient amount of labeled data to train a model is often difficult and expensive.

Defects are typically rare in manufacturing. To collect enough data to train a deep learning model (e.g., ~1000 images of defective parts on a production line), the vision system may have to be in data collection mode for several months or even years. Furthermore, even with enough training data, the generalization capabilities of the model may still rely on the specific parts and defects that it is trained on. Inevitable parts and defects variability make it difficult to automatically inspect and generate repair strategies, or perform direct decision making, using traditional deep learning models.

Typically, there are large number of manufacturing process parameters that affect the quality of a manufactured part, controlling which could reduce the observed part variability (i.e., occurrence of defects). Understanding defects and their causes may represent the first step to maintaining quality of a manufactured part within a desired specification. Identifying various categories of defects may provide more insight about the source of error in the manufacturing process. However, the above task is challenging due to the scarcity of labeled defect data in manufacturing.
Jake Snell ET AL: *"Prototypical Networks for Few-shot Learning"* teaches a few shot classification using a neural network learning a metric space in which classification can be performed by computing distances to prototype representations of each class. In the training phase of the neural network, class prototypes are computed from support examples, and a classification loss is computed.

### SUMMARY

Aspects of the present disclosure can be used to develop advanced deep neural networks to perform visual inspection of anomalies that is trainable on coarsely labeled limited defect data or unlabeled data. This flexibility helps to overcome the challenges of limited defect data in industrial applications, such as in manufacturing. The developed deep learning-based framework is configured to perform detailed anomaly analysis, including anomaly detection, anomaly localization, anomaly segmentation, and anomaly classification with little to no supervision.

According to a first aspect, a computer-implemented method is provided for training a deep learning-based vision system for joint detection, localization, segmentation and classification of anomalies in images. The method comprises inputting images from a training dataset to train an autoencoder by backpropagation of an autoencoder loss that includes an attention loss. The attention loss encourages an encoder network of the autoencoder to generate attention maps maximizing focus on normal regions of images, whereby, given an anomalous input image, the encoder network is configured to generate an attention map that spatially localizes an anomaly. The method further comprises training an image segmentation model. This includes extracting feature representations using the encoder network from images in the training dataset, and alternatively optimizing cluster labels of pixels in a forward process and optimizing the feature representations by backpropagation of a segmentation error. The method further comprises tuning the encoder network in a few-shot learning process for classifying anomalies. This includes extracting feature representations using the encoder network from anomalous images in respective support and query sets created from the training dataset, using support set feature representations to learn embeddings of anomaly classes, and updating the encoder network based on a classification error computed using query set feature representations.

Other aspects of the disclosure implement features of the above-described methodology in computer program products and computing systems for joint detection, localization, segmentation and classification of anomalies in images.

Additional technical features and benefits may be realized through the techniques of the present disclosure. Embodiments and aspects of the disclosure are described in detail herein and are considered a part of the claimed subject matter. For a better understanding, refer to the detailed description and to the drawings.

### BRIEF DESCRIPTION OF THE DRAWINGS

The foregoing and other aspects of the present disclosure are best understood from the following detailed description when read in connection with the accompanying drawings. To easily identify the discussion of any element or act, the most significant digit or digits in a reference number refer to the figure number in which the element or act is first introduced.
FIG. 1 schematically illustrates a learning framework for anomaly detection and localization extended to unsupervised anomaly segmentation, according to an example embodiment.
FIG. 2 illustrates a trained vision system for joint detection, localization, segmentation and classification of anomalies in images according to an example embodiment.
FIG. 3 illustrates an example of (i) an input image, (ii) an attention map spatially localizing an anomalous region in the input image and (ii) segmentation of a defective object area in the input image based on binary clustering.
FIG. 4 illustrates examples of anomaly classes predicted from query images.

### DETAILED DESCRIPTION

An anomaly refers to an event or occurrence which differs from the norm. In machine learning, anomaly detection is usually based on the assumption that anomalies occur rarely in the dataset and that their features differ from the normal instances significantly. Deep learning methods can be used to train neural networks to perform visual quality inspection for manufacturing processes, wherein a defect on a manufactured part can be identified based on detection of an anomaly in an image of the part. Anomaly detection based on deep learning methods can largely reduce or obviate the need for anomalous data (e.g., images with defects) in the training process, as the model training can be substantially implemented using normal data (e.g., defect-free images), which is abundantly available. Deep learning methods can also be used for localizing an anomaly in an image by generation of attention maps. While attention maps provide general spatial information of an anomaly, they do not provide enough information for finer tasks such as segmentation of the anomaly or classification of the anomaly (e.g., defect classes), which may be desirable for detailed analysis of defects, such as determining a root cause and implementing corrective actions.

The disclosed methodology provides a unified deep learning framework for training a vision system to perform anomaly detection and localization, unsupervised anomaly segmentation and anomaly classification. Anomaly detection and localization is performed using an autoencoder. An autoencoder architecture comprises an encoder network having a number of convolutional layers that can generate a latent variable from an input image, and a decoder network that can reconstruct an output image from the latent variable. In accordance with the disclosed methodology, the autoencoder is trained on images in a training dataset based on an autoencoder loss, which includes an attention loss, typically in addition to other losses (e.g., reconstruction loss). The attention loss encourages the encoder network to generate attention maps maximizing focus on normal regions of images. Thus, given an anomalous input image, the encoder network is configured to generate an attention map that spatially localizes an anomaly. One example of autoencoder architecture for anomaly detection and localization that can be suitably employed herein is described in the Internal Application Publication WO2021062133A1.

For anomaly segmentation, the disclosed methodology uses the convolution layers of the same encoder network (used for anomaly detection and localization) as a feature extractor for an image segmentation model in an unsupervised learning process. Training the image segmentation model includes alternately executing forward and backward processes as follows. The forward process includes extracting feature representations from training images using the encoder network and optimizing cluster labels of pixels. The backward process includes optimizing the feature representations by backpropagation of a segmentation error, whereby parameters of the encoder network and the image segmentation model are simultaneously updated.

It has been observed that joint training of the autoencoder and the image segmentation model provides faster training and greatly improves the accuracy of the respective models, which inform each other in the learning process. In one embodiment, the autoencoder and the image segmentation model may be jointly trained by updating their respective parameters based on the autoencoder loss and the segmentation error in alternate iterations. The joint training also pre-trains the encoder network for anomaly classification using few-shot learning. In some embodiments, the autoencoder may be trained based on the autoencoder loss for a specified number of training epochs to attain a desired degree of model stability, prior to commencement of the joint training of the autoencoder and the image segmentation model.

According to the disclosed methodology, the encoder network, which has been trained for anomaly detection, localization and segmentation, is subsequently tuned in a few-shot learning process for anomaly classification tasks. The few-shot learning process is based on extracting feature representations using the encoder network from anomalous images in respective support and query sets created from the training dataset. The support set feature representations are used to learn embeddings of anomaly classes in the support set. The query set feature representations are used to compute a classification error, which may be backpropagated to update the encoder network.

The disclosed methodology is particularly suitable for visual quality inspection in a manufacturing process for segmenting defect areas and classifying defects of manufactured parts. The model predictions can be useful for determining causes of defects as well as for implementing corrective actions, such as adjusting manufacturing process parameters, so that similar defects are prevented in future.

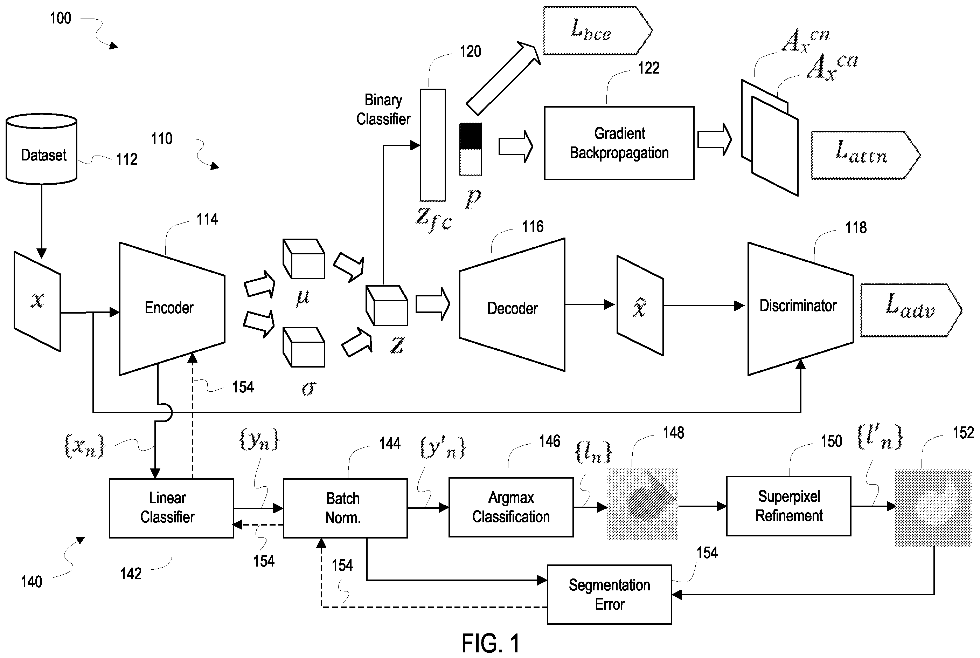

FIG. 1 illustrates a deep learning framework 100 for anomaly detection and localization extended to unsupervised anomaly segmentation, according to an example embodiment. The framework 100, including the autoencoder 110 and the image segmentation model 140, and components thereof, may be implemented by a computing system in various ways, for example, as hardware and software modules. The programming for the software modules may take the form of processor-executable instructions stored on non-transitory machine-readable storage mediums and the hardware may include processors to execute those instructions. The processing capability of the systems, devices, and modules described herein, may be distributed among multiple system components, such as among multiple processors and memories, optionally including multiple distributed processing systems or cloud/network elements.

The autoencoder 110 is trained on images from a training dataset 112. Consistent with a disclosed embodiment, the autoencoder 110 may be trained in a weakly supervised learning process with coarsely annotated images. For example, for a visual quality inspection use-case, the training dataset 112 may include image-level labels for "normal" images representing nominal manufactured parts and "anomalous" images representing defective manufactured parts. In other embodiments, the autoencoder may be trained in an unsupervised learning process.

As shown in FIG. 1, input image x is passed through encoder network 114 comprising a number of convolutional layers (e.g., including a residual network) that generates a latent variable z as output. To preserve spatial relationship between the latent variable z and the input image x, the latent variable z may include a convolutional variable. The latent variable z is used by decoder network 116 (e.g., also including a residual network) to generate a reconstructed image *x̂*, which is a reconstruction of original input image *x.* The loss function *L* for training an autoencoder typically includes a reconstruction loss *L_{R}*, which is a measure of an error (e.g., a mean-squared error) between the input images *x* and the reconstructed images *x̂* in a training batch. The shown example depicts a variational autoencoder, where the loss function *L* also includes Kullback-Liebler divergence (*KL*) to calculate the statistical distance between the true distribution and an approximating distribution in the latent variable *z*. To obviate a blurry reconstruction, the shown example uses a discriminator 118 to improve the stability of the training and generate sharper reconstructed images *x̂* using adversarial learning based on an adversarial loss *L_{adv}.*

To train the autoencoder 110 to spatially localize anomalies, attention maps are generated utilizing the convolutional layers of the encoder network 114. The attention maps may be computed from a feature representation of the latent variable z generated by the encoder network 114 from normal images x in the training dataset 112. The attention maps may be computed using class activation mapping (CAM) methods, such as Grad-CAM, among others. Since attention maps obtained from feature representations (or "feature maps") illustrate the regions of the image responsible for specific activation of neurons in the feature maps, an attention loss *Lₐₜₜₙ* is incorporated into the overall loss used for training the autoencoder 110. The attention loss *Lₐₜₜₙ* encourages the encoder network 114 to generate attention maps maximizing focus on normal regions of images. During testing, given an anomalous input image, the encoder network 114 generates an attention map that can be used to spatially localize an anomaly from the areas of the image that the attention map does not focus on.

In a weakly supervised setting, a few anomalous images, typically (but not necessarily) in the range of 5-20% of the training dataset 112, may be used. The training dataset 112 may be labeled with image-level labels ("normal", "anomalous") without pixel-wise annotation. In this setting, a binary classifier 120 may be connected at the output of the feature representation of the latent variable *z.* Given an image *x* and its ground truth label *y,* the prediction *p* of the classifier 120 can be defined as *p* ∈ {*ca, cn*}, where *ca* and *cn* are anomalous and normal classes, respectively. The binary classifier 120 may be trained using a binary classification loss, for example, a binary cross-entropy loss *L_{bce},* based on the predicted class label *p* and the ground truth label *y.* As shown in FIG. 1, the convolutional latent variable z may be cloned into a new tensor and flattened to form a fully connected layer *z_{fc} ,* to which, a 2-node output layer may be added to form binary classifier 120. Variables *z* and *z_{fc}* share parameters. Flattening *z_{fc}* may enable a higher magnitude of gradient backpropagation from prediction *p* for computing the attention maps.

In the shown example, the attention maps include an attention map for the normal class ${A}_{x}^{cn}$ and an attention map for the anomalous class ${A}_{x}^{ca}$, which are generated by gradient backpropagation operation 122 where gradients from the prediction *p* are backpropagated via the binary classifier 120 to the last convolutional layer of the encoder network 114. Here, normal and anomalous attention represent respectively the areas affecting the normal and anomalous prediction *p* of the binary classifier 120. The attention loss *Lₐₜₜₙ* may be designed to minimize an area of the image covered by the attention map of the anomalous class ${A}_{x}^{ca}$ and simultaneously enforce the attention map of the normal class ${A}_{x}^{cn}$ to cover the entire image. In this way, the encoder network 114 may be encouraged to generate an attention map that focuses on all normal (i.e., non-anomalous) regions of the image to reduce the need for large amount of anomalous training data. Based on this training regimen, when the network is given an image classified as anomalous by the binary classifier 120, the underlying anomalous attention map will focus on the image regions considered as abnormal by the solution.

Since an attention map is computed by backpropagating the gradients from prediction *p*, any incorrect prediction *p* would generate an undesired attention map. This would lead to the encoder network 114 learning to focus on erroneous areas of the image during training, which is to be avoided using the attention loss *Lₐₜₜₙ*. The attention loss *Lₐₜₜₙ* may therefore be computed only for the normal images correctly classified by the binary classifier 120 (i.e., if *p = y = cn*). The attention loss *L*_{*attn,*1} for each image may be defined as follows: ${L}_{attn , 1} = \frac{1 \left(p=y=cn\right)}{\left|{A}_{x}^{cn}\right|} {\sum }_{i , j} {\left(1-{A}_{x}^{cn}\right)}_{i , j} + {\left({A}_{x}^{ca}\right)}_{i , j}$

In equation (1), **1(·)** is an indicator function. The attention loss *Lₐₜₜₙ* is the average of loss *L*_{*attn,*1} over all images in a training batch. The final autoencoder loss *L_{final}* may then be defined as follows: ${L}_{final} = {w}_{1} L + {w}_{2} {L}_{adv} + {w}_{3} {L}_{bce} + {w}_{4} {L}_{attn}$ where *w*₁, *w*₂, *w*₃, *w*₄ are empirically chosen weights.

Incorporating the binary classifier loss *L_{bce}* in the final autoencoder loss *L_{final}* enables training the binary classifier 120 to be used during testing to predict whether an input image is normal or anomalous. An attention map may be generated for a test image classified as anomalous, which can be used to spatially locate an anomaly in the test image.

An attention map can indicate regions of the input image that the encoder network focusses on to detect an anomaly. However, for detailed analysis of a defect, it is often helpful to gain an insight on the geometry of the defect. Anomaly segmentation provides a finer form of anomaly localization by assigning labels to image pixels for separating pixels that belong to a defect area, which can better describe the geometry of a defect. Traditional supervised deep learning-based segmentation algorithms need detailed labeled data that shows the segmented defects, which can be costly to acquire in industrial settings. The disclosed methodology is based on an unsupervised image segmentation algorithm that does not depend on detailed ground truth segmentation map data.

An example of unsupervised image segmentation is described in the publication: A. Kanezaki, "Unsupervised Image Segmentation by Backpropagation," 2018 IEEE International Conference on Acoustics, Speech and Signal Processing (ICASSP), Calgary, AB, Canada, 2018, pp. 1543-1547.

Continuing with reference to FIG. 1, the described deep learning framework for anomaly detection and localization can be extended to train an image segmentation model 140 in an unsupervised learning process. Consistent with a disclosed embodiment, the image segmentation model 140 may be trained for optimizing cluster labels of pixels based on a binary clustering, such that the image segmentation model 140 is configured to segment a defect area from a background in an anomalous image. In the unsupervised learning process, given an input image x from the training dataset 112, a feature representation {*xₙ*} is extracted by passing the image x through convolutional layers of the encoder network 114. A joint optimization of the cluster labels of pixels together with feature representations {*xₙ*} is carried out to update parameters of the encoder network 114 and image segmentation model 140. Alternate execution of pixel label prediction in a forward process and network parameter learning in a backward process may be carried out to meet three main constraints: (a) pixels of similar features will be assigned the same label, (b) spatially continuous pixels will be assigned the same label, and (c) the number of unique labels is expected to be large.

According to the disclosed embodiment, cluster labels of pixels may be optimized in the forward process as follows. From an input image x, a feature representation ${\left\{{x}_{n}∈{ℝ}^{d}\right\}}_{n = 1}^{N}$ may be extracted using the encoder network 114 based on 2D convolutions, where each pixel n is represented by a d dimensional feature vector *xₙ*, and *N* is the total number of pixels in the input image *x.* A classification model may be applied to the extracted feature vectors *xₙ* to generate a pixel-wise response map. The classification model can include any model that can be used to classify pixels having similar feature vectors into the same label, forcing the constraint (a). In the shown embodiment, the classification model includes a linear classifier 142. The response map {*yₙ*} may be generated by the linear classifier 142 using 1D convolution as ${\left\{{y}_{n}={W}_{c}{x}_{n}+{b}_{c}\right\}}_{n = 1}^{N}$, where ${y}_{n} ∈ {ℝ}^{q}$, *q* being the number of clusters, and where *W_{c}* and *b_{c}* are parameters of the linear classifier 142 such that ${W}_{c} ∈ {ℝ}^{q \times d}$ and ${B}_{c} ∈ {ℝ}^{q}$.

To force constraint (c) and avoid under-segmentation, the original response map {*yₙ*} may be normalized by a batch normalization process 144 to generate a normalized response map ${\left\{y{′}_{n}\right\}}_{n = 1}^{N}$, such that {*y*'*ₙ*} has zero mean and unit variance, where $y {′}_{n} ∈ {ℝ}^{q}$. This gives an even chance to each *y*'*_{n,i}*(*i* = 1, ... *q*) to be the maximum value of {*y*'*ₙ*} across axes. The cluster label *lₙ* for each pixel *n* may be computed by determining the dimension that has the maximum value in *y'ₙ,* using argmax classification operation146. The argmax classification operation 146 thus yields cluster labels {*lₙ*}, which result in a segmented image 148 based on a clustering of the feature vectors into *q* clusters.

To achieve spatial continuity of pixels as per constraint (b), neighboring pixels may be grouped into super-pixels via a super-pixel refinement operation 150, such that each pixel in a super-pixel is forced to have the same cluster label. The cluster label for all pixels in a super-pixel may be assigned the most frequent label in the cluster. In this manner, refined cluster labels {*l*'*ₙ*} may be generated, resulting in a segmented image 152 having reduced number of cluster labels. The cluster labels, as well as the number of clusters, may thus be optimized in the forward process. In the shown example, the maximum number of cluster labels after super-pixel refinement is set as 2, whereby a defective object area can be separated from the rest of the image.

In a backward process, the parameters of the image segmentation model 140 and the encoder network 114 are updated based on computation of a segmentation error 154 using the cluster labels and the pixel-wise response map. In the shown example, the segmentation error 154 is computed as a SoftMax loss between the normalized response map {*y*'*ₙ*} and the refined cluster labels {*l*'*ₙ*}. The segmentation error 154 may be backpropagated (as shown by dashed lines 154) based on gradient descent to update parameters of the convolutional filters of the encoder network 114 and the parameters of the linear classifier 142.

In one embodiment, the forward and the backward processes of unsupervised learning for image segmentation may be executed after each training iteration of the autoencoder for anomaly detection and localization (described above), to obtain the final prediction of cluster labels {*l*'*ₙ*}. In this manner, the autoencoder 110 and the image segmentation model 140 may be jointly trained while learning from each other, to provide faster training and produce a high degree of prediction accuracy.

Once an anomaly is detected and localized, it is desirable to categorize it at a more granular level to gain a better understanding of the root cause of a defect. However, the challenge is that for many of the anomaly classes, sufficient data is not available for training traditional deep learning-based classification algorithms. For example, in many manufacturing applications, available data may include less than 10 samples per class of defect. Moreover, a traditional neural network (such as a convolutional neural network) usually inputs a batch of samples each time in training until the entire training dataset is covered, and it is thus not robust to cope with imbalanced data.

The disclosed methodology uses Few-shot learning (FSL), also known as low-shot learning (LSL), to train the encoder network 114 for anomaly classification tasks. FSL is a type of meta-learning where a learner is trained on various related tasks during the meta-training phase to generalize well to unseen tasks with just a few instances during the meta-testing phase. The encoder network 114, which has been already trained on anomaly detection, localization and segmentation as described in FIG. 1, can thus function as a pre-trained feature extractor that may be subsequently fine-tuned using FSL. Using this approach, depending on data availability, 1-10 samples per class could be sufficient for training. This approach can also handle the issue of imbalanced data distribution over the number of class samples.

According to the disclosed methodology, the training dataset 112 is split into a support set and a query set based on a M-way *K-shot* paradigm, where *M* is the number of anomaly classes and *K* is the number of samples per class. The pre-trained encoder network 114 is used for feature extraction for the support set as well as the query set. The support set and query set comprise anomalous images from the training dataset 112, which have been assigned a ground truth anomaly class label. The support set feature representations are used to learn embeddings of anomaly classes. The query set feature representations are used to compute a classification loss for updating the encoder network 114.

An example approach to FSL suitable for the disclosed methodology involves employing a prototypical network, although other FSL approaches may be also applicable. A prototypical network learns a metric space where classification can be executed by computing distances to prototype representations of each class. In the present application, the encoder network 114 may function as the prototypical network. In a meta-training phase, the support set feature representations extracted using the encoder network 114 may be used to compute a prototype of each anomaly class in the support set as a mean vector representation of samples in that anomaly class in an embedding space. Samples in the query set may be classified based on computing distances to the prototype of each anomaly class in the embedding space, and therefrom computing the classification error between the predicted classification and the ground truth label. The classification error may be backpropagated to update or tune parameters of the encoder network 114. In a meta-testing phase, the well-learned embedding feature representations extracted using the encoder network 114 may be used to compute the distances among the query images and the class prototypes generated from the support set. The final anomaly classification may be performed by calculating the posterior probability for the query instance. In some embodiments, class activation mapping may be used to visualize and interpret the discriminative regions of interest most relevant to specific anomaly classes.

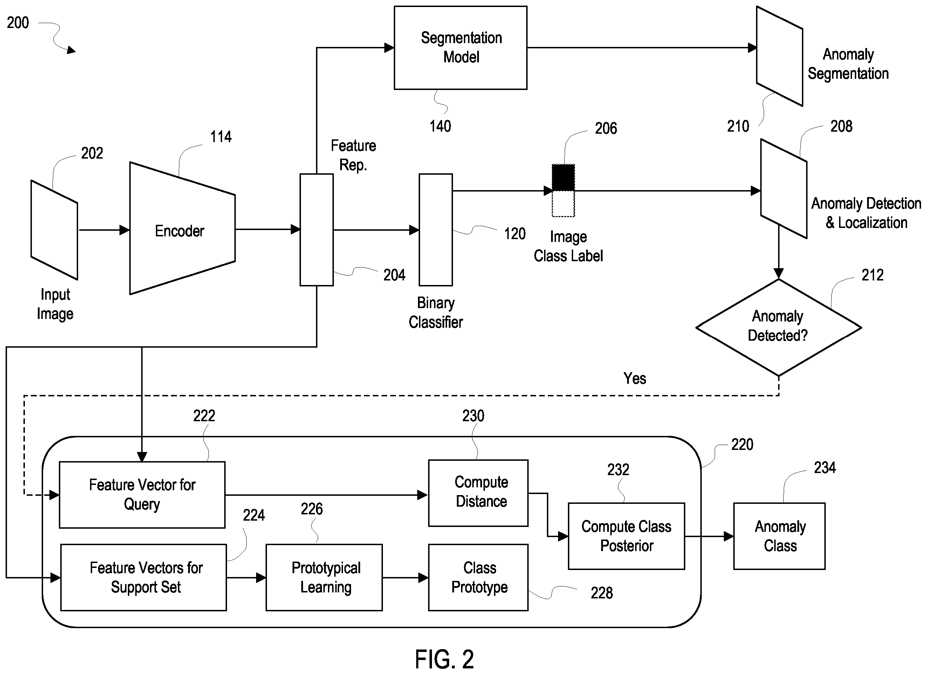

FIG. 2 illustrates a deep learning-based vision system 200 that has been trained for joint detection, localization, segmentation and classification of anomalies in images according to the embodiments disclosed herein. The vision system 200 can be suitably deployed for visual quality inspection of parts produced by a manufacturing process. Visual quality inspection may be carried out by acquiring an image 202 of a manufactured part to be inspected. The image 202 may be acquired, for example, via a camera at an inspection station of a production line. The acquired image 202 may be inputted to the encoder network 114 with trained convolutional filters to extract a feature representation 204 of the acquired image 202. The feature representation 204 may represent an output of a final convolutional layer of the encoder network 114. The extracted feature representation 204 can be used for joint anomaly detection (classifying image 202 as normal or anomalous), localization and segmentation, and if anomalous, predicting an anomaly class, as described below.

For anomaly detection, the extracted feature representation 204 of the image 202 may be passed through the trained binary classifier 120 to predict an image class label 206 ("normal or "anomalous"). If the predicted image class label 206 is "anomalous", an anomaly is said to be detected in the image 202, which is indicative of a defective part. In some embodiments, the gradients of the binary classifier 120 prediction may be backpropagated to generate an attention map that spatially localizes an anomaly in the image 202 based on the areas that affect the "anomalous" prediction by the binary classifier 120. An output image 208 may be generated that depicts the defective part with localization of the detected anomaly based on the attention map.

For anomaly segmentation, the extracted feature representation 204 of the image 202 may be fed to the image segmentation model 140 with trained parameters (e.g., linear classifier parameters) to predict cluster labels for pixels in the image. Consistent with the embodiment described above, a binary clustering of image pixels may be executed using the image segmentation model 140, to generate an output image 210 with refined pixel labels separating a defective object area from the background.

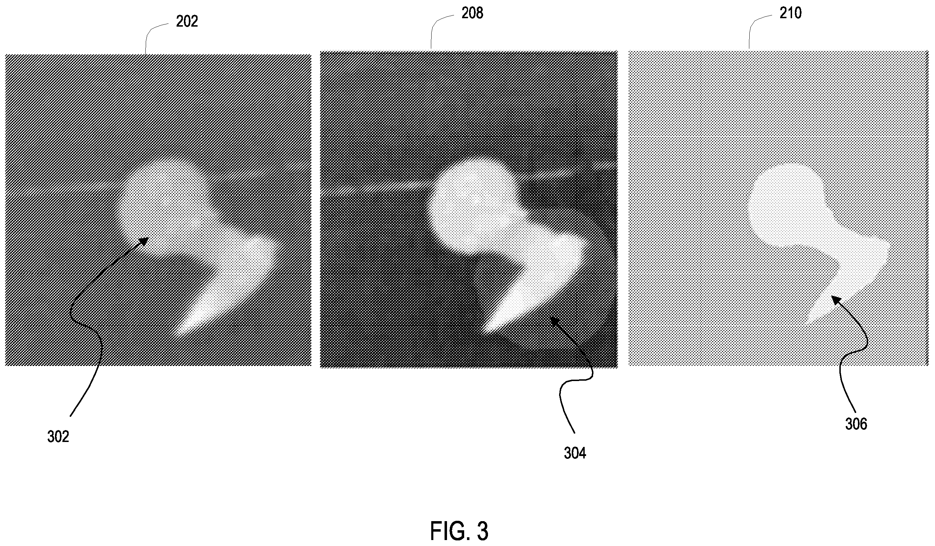

An example of anomaly localization and segmentation is shown in FIG. 3. Here, the input image 202 shows portion of a manufactured part that has a glue dot 302 deposited on a part surface by a robotic arm holding a deposition nozzle. The nominal or "normal" shape of the glue dot 302 is approximately circular. However, in the shown example, the glue dot has an elongated portion, which differs from expected shape and therefore results in the image 202 being classified as "anomalous". The image 208 illustrates an output of anomaly localization using an attention map, which highlights only the specific area 304 of image that contributed to the "anomalous" classification. The image 210 illustrates an output of anomaly segmentation that segments the defective object area from the rest of the image based on binary clustering of image pixels. Note that the defective object in this case is the glue dot and the segmented area 306 includes the entire defective glue dot, which is descriptive of the precise geometry of the defect to be used for further defect quantification.

Continuing with reference to FIG. 2, in the event that an anomaly has been detected in the image 202 (represented by decision block 212), an FSL framework 220 may be triggered to predict an anomaly class. The extracted feature representation 204 from the encoder network 114 may be fed to the FSL framework 220 as a query feature vector 222. The FSL framework 220 may be based on embeddings learned using the encoder network 114. Consistent with the disclosed embodiment, the encoder network 114 may function as a prototypical network, which may be used to extract feature representations 204 to define feature vectors for a support set 224. The support set may comprise a set of anomalous images with ground truth class labels for a number of anomaly classes with one or more samples per class. The anomaly classes in the support set may be similar to or different from the anomaly classes that were used during meta-training. The feature vectors for the support set 224 may be used in prototypical learning 226, which involves computing a class prototype 228 of each anomaly class in the support set as a mean vector representation of samples in that anomaly class in an embedding space. Anomaly classification may be performed by computing a distance 230 (e.g., a Euclidean distance) between the query feature vector 222 and each of the class prototypes 228 and computing a class posterior 232 by identifying the class protype 228 having the minimum distance to the query feature vector 222. The anomaly class associated with the identified class prototype 228 with the minimum distance to the query feature vector 222 may be output as the predicted anomaly class 234 of the image 202.

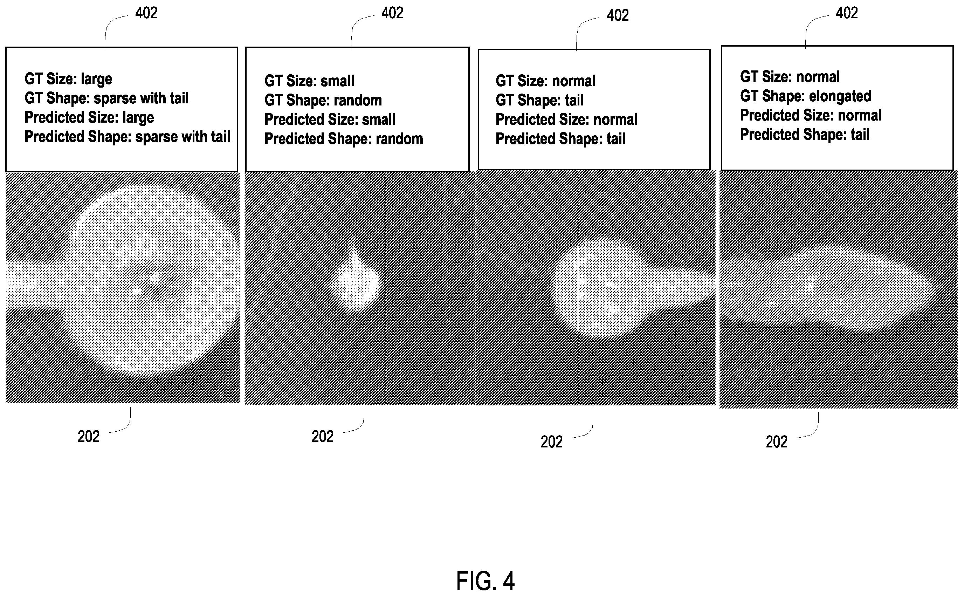

An example of anomaly classification is illustrated in FIG. 4, which depicts an output 402 of the above-described prototypical network-based anomaly classifier in each case for a set of test images 202. The test images 202 each depict a manufactured part with a glue dot deposited on a part surface, similar to the example shown in FIG. 3. In the present example, anomaly classification is done on two attributes, namely, size and shape. For the first attribute, shape, the anomaly classes for prototypical learning included "elongated", "tail", "sparse", "sparse with tail" and "random". For the second attribute, size, the anomaly classes for prototypical learning included "large", "small" and "normal". The illustrated output 402 compares the predicted anomaly class label with a ground truth (GT) anomaly class label.

Anomaly classification, often in combination with anomaly segmentation, can be useful in analyzing defects in manufactured parts to determine corrective actions. Continuing with the example illustrated in FIG. 4, an anomaly classified as "elongated" or "tail" may indicate that the robotic arm holding the deposition nozzle was not moving at an optimum speed, which may have caused it to move from the deposition site before completing the deposition process, or start the deposition process before arriving at the deposition site. An anomaly classified as "sparse" may indicate bubble formation in the deposition nozzle, which may have caused the glue dot to have a different texture. The anomaly segmentation output may be used to additionally gain quantitative insight into the defects. For example, depending on the location and extent of the "tail" portion in the segmented defect, it may be determined how much faster or slower than the optimum speed the robotic arm was moving. The outputs of anomaly classification and/or anomaly segmentation may be utilized to adjust an upstream manufacturing process parameter, to prevent future occurrences of similar defects.

The embodiments of the present disclosure may be implemented with any combination of hardware and software. In addition, the embodiments of the present disclosure may be included in an article of manufacture (e.g., one or more computer program products) having, for example, a non-transitory computer-readable storage medium. The computer readable storage medium has embodied therein, for instance, computer readable program instructions for providing and facilitating the mechanisms of the embodiments of the present disclosure. The article of manufacture can be included as part of a computer system or sold separately.

The computer readable storage medium can include a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. Computer readable program instructions described herein can be downloaded to respective computing/processing devices from a computer readable storage medium or to an external computer or external storage device via a network, for example, the Internet, a local area network, a wide area network and/or a wireless network.

The system and processes of the figures are not exclusive. Other systems, processes and menus may be derived in accordance with the principles of the disclosure to accomplish the same objectives. Although this disclosure has been described with reference to particular embodiments, it is to be understood that the embodiments and variations shown and described herein are for illustration purposes only. Modifications to the current design may be implemented by those skilled in the art, without departing from the scope of the appended claims.

## Claims

1. A computer-implemented method for training a deep learning-based vision system (200) for joint detection, localization, unsupervised segmentation and classification of anomalies in images, comprising:
inputting images from a training dataset (112) to train an autoencoder (110) by backpropagation of an autoencoder loss (*L_{final}*) that includes an attention loss, which encourages an encoder network (114) of the autoencoder (110) to generate attention maps maximizing focus on normal regions of images, whereby, given an anomalous input image, the encoder network (114) is configured to generate an attention map that spatially localizes an anomaly,
**characterized in** comprising unsupervised training an image segmentation model (140) by extracting feature representations (204) using the encoder network (114) from images in the training dataset (112), and alternatively optimizing cluster labels of pixels in a forward process and optimizing the feature representations (204) by backpropagation of a segmentation error (154), and
tuning the encoder network (114) in a few-shot learning process for classifying anomalies by extracting feature representations (204) using the encoder network (114) from anomalous images in respective support and query sets created from the training dataset (112), using support set feature representations (204) to learn embeddings of anomaly classes, and updating the encoder network (114) based on a classification error computed using query set feature representations (204).

2. The method according to claim 1, wherein the autoencoder (110) and the image segmentation model (140) are jointly trained by updating respective parameters based on the autoencoder loss (*L_{final}*) and the segmentation error (154) in alternate iterations, followed by the tuning of the encoder network (114) in the few-shot learning process for classifying anomalies.

3. The method according to claim 2, comprising training the autoencoder (110) based on the autoencoder loss (*L_{final}*) for a number of training epochs prior to commencement of the joint training of the autoencoder (110) and the image segmentation model (140).

4. The method according to any of claims 1 to 3, wherein the training dataset (112) comprises image-level labels for normal images representing nominal manufactured parts and anomalous images representing defective manufactured parts.

5. The method according to claim 4, wherein, for training the autoencoder (110), the attention maps are computed from a feature representation (204) of a latent variable (z) generated by the encoder network (114) from normal images in the training dataset (112).

6. The method according to claim 5,
wherein the autoencoder (110) comprises a binary classifier (120) connected at the output of the latent representation,
wherein computing the attention maps comprises computing attention maps for normal and anomalous classes by backpropagation of gradients from a prediction of the binary classifier (120) from the normal images, and
wherein the attention loss is designed to minimize an area covered by the attention map of the anomalous class and simultaneously enforce the attention map of the normal class to cover an entire image.

7. The method according to claim 6, wherein the autoencoder loss (*L_{final}*) further includes a binary classification loss (*L_{bce}*) computed from a prediction of the binary classifier (120) for images in the training dataset (112), to configure the binary classifier (120) for classifying an input image as normal or anomalous.

8. The method according to any of claims 4 to 7, wherein the image segmentation model (140) is trained for optimizing cluster labels of pixels based on a binary clustering, such that the image segmentation model (140) is configured to segment a defective object area from a background in an anomalous image.

9. The method according to any of claims 1 to 8, wherein training the image segmentation model (140) comprises:
optimizing the cluster labels of pixels in the forward process by:
extracting a feature representation (204) from an input image using the encoder network (114) where each pixel of the input image is represented by a feature vector (*xₙ*),
applying a classification model to the extracted feature vectors (*xₙ*) to generate a pixel-wise response map,
computing a cluster label for each pixel based on pixel-wise response map, and
utilizing the cluster labels and the pixel-wise response map to compute the segmentation error (154), and
backpropagating the segmentation error (154) to update parameters of the encoder network (114) and the classification model.

10. The method according to any of claims 1 to 9, wherein the few-shot learning process comprises:
using the support set feature representations (204) extracted using the encoder network (114) to compute a prototype of each anomaly class in the support set as a mean vector representation of samples in that anomaly class in an embedding space,
classifying samples in the query set based on computing distances to the prototype of each anomaly class in the embedding space, and therefrom computing the classification error, and
backpropagating the classification error to update parameters of the encoder network (114).

11. A computer-implemented method for performing visual quality inspection of parts produced by a manufacturing process, comprising:
training a deep learning-based vision system (200) by a method according to any of claims 1 to 10,
acquiring an image of a manufactured part to be inspected,
inputting the acquired image to the encoder network (114) to extract a feature representation (204) of the acquired image,
classifying the acquired image as normal or anomalous based on the feature representation (204) of the acquired image, and
if anomalous, determining an anomaly class by feeding the feature representation (204) of the acquired image as a query to a few-shot learning framework (220) that is based on embeddings learned using the encoder network (114).

12. The method according to claim 11, further comprising feeding the feature representation (204) of the acquired image to the image segmentation model (140) to segment a defective object area in the acquired image.

13. The method according to any of claims 11 and 12, further comprising adjusting a manufacturing process parameter based on the anomaly class and/or an output of the image segmentation model (140).

14. A non-transitory computer-readable storage medium encoded with instructions that, when processed by a computing system, configure the computing system to perform the method according to any of claims 1 to 10.

15. A computing system comprising:
one or more processors, and
non-transitory memory storing instructions executable by the one or more processors to carry out a method according to any of claims 1 to 10.

## Patentansprüche

1. Computerimplementiertes Verfahren zum Trainieren eines tiefenlernbasierten Bildverarbeitungssystems (200) für eine gemeinsame Erkennung, Lokalisierung, unüberwachte Segmentierung und Klassifizierung von Anomalien in Bildern, umfassend:
Eingeben von Bildern aus einem Trainingsdatensatz (112), um einen Autocodierer (110) durch eine Rückausbreitung eines Autocodiererverlusts (L_{final}) zu trainieren, der einen Aufmerksamkeitsverlust beinhaltet, was ein Codierernetzwerk (114) des Autocodierers (110) anregt, Aufmerksamkeitskarten zu erzeugen, die einen Fokus auf normale Bildbereiche maximieren, wodurch das Codierernetzwerk (114) für ein gegebenes anomales Eingangsbild dazu ausgelegt ist, eine Aufmerksamkeitskarte zu erzeugen, die eine Anomalie räumlich lokalisiert,
**dadurch gekennzeichnet, dass** es ein unüberwachtes Trainieren eines Bildsegmentierungsmodells (140) umfasst, indem Merkmalsdarstellungen (204) unter Verwendung des Codierernetzwerks (114) aus Bildern in dem Trainingsdatensatz (112) extrahiert werden und alternativ Cluster-Labels von Pixeln in einem Weiterleitungsprozess optimiert werden und die Merkmalsdarstellungen (204) durch eine Rückausbreitung eines Segmentierungsfehlers (154) optimiert werden, und
Abstimmen des Codierernetzwerks (114) in einem Few-Shot-Lernprozess zum Klassifizieren von Anomalien, indem Merkmalsdarstellungen (204) unter Verwendung des Codierernetzwerks (114) aus anomalen Bildern in jeweiligen Unterstützungs- und Abfragesätzen extrahiert werden, die aus dem Trainingsdatensatz (112) erzeugt wurden, indem Merkmalsdarstellungen der Unterstützungssätze (204) verwendet werden, um Einbettungen von Anomalieklassen zu erlernen, und indem das Codierernetzwerk (114) basierend auf einem Klassifizierungsfehler aktualisiert wird, der unter Verwendung von Merkmalsdarstellungen der Abfragesätze (204) berechnet wird.

2. Verfahren nach Anspruch 1, wobei der Autocodierer (110) und das Bildsegmentierungsmodell (140) gemeinsam trainiert werden, indem jeweilige Parameter basierend auf dem Autocodiererverlust (L_{final}) und dem Segmentierungsfehler (154) in alternativen Iterationen aktualisiert werden, und nachfolgend das Codierernetzwerk (114) in dem Few-Shot-Lernprozess zum Klassifizieren von Anomalien abgestimmt wird.

3. Verfahren nach Anspruch 2, das ein Trainieren des Autocodierers (110) basierend auf dem Autocodiererverlust (L_{final}) für eine Anzahl von Trainingsepochen vor dem Beginn des gemeinsamen Trainings des Autocodierers (110) und des Bildsegmentierungsmodells (140) umfasst.

4. Verfahren nach einem der Ansprüche 1 bis 3, wobei der Trainingsdatensatz (112) Labels auf Bildebene für normale Bilder, die nominal gefertigte Teile darstellen, und für anomale Bilder umfasst, die defekt gefertigte Teile darstellen.

5. Verfahren nach Anspruch 4, wobei zum Trainieren des Autocodierers (110) die Aufmerksamkeitskarten aus einer Merkmalsdarstellung (204) einer latenten Variablen (z) berechnet werden, die von dem Codierernetzwerk (114) aus normalen Bildern in dem Trainingsdatensatz (112) erzeugt wird.

6. Verfahren nach Anspruch 5,
wobei der Autocodierer (110) einen binären Klassifikator (120) umfasst, der an den Ausgang der latenten Darstellung angeschlossen ist,
wobei das Berechnen der Aufmerksamkeitskarten ein Berechnen von Aufmerksamkeitskarten für normale und anomale Klassen durch eine Rückausbreitung von Gradienten aus einer Vorhersage des binären Klassifikators (120) aus den normalen Bildern umfasst, und
wobei der Aufmerksamkeitsverlust dazu ausgelegt ist, um einen Bereich zu minimieren, der durch die Aufmerksamkeitskarte der anomalen Klasse abgedeckt wird, und um gleichzeitig die Aufmerksamkeitskarte der normalen Klasse zu verstärken, um ein gesamtes Bild abzudecken.

7. Verfahren nach Anspruch 6, wobei der Autocodiererverlust (L_{final}) ferner einen binären Klassifizierungsverlust (L_{bce}) beinhaltet, der aus einer Vorhersage des binären Klassifikators (120) für Bilder in dem Trainingsdatensatz (112) berechnet wird, um den binären Klassifikator (120) dazu auszulegen, um ein Eingangsbild als normal oder anomal zu klassifizieren.

8. Verfahren nach einem der Ansprüche 4 bis 7, wobei das Bildsegmentierungsmodell (140) trainiert wird, um Cluster-Labels von Pixeln basierend auf einer binären Clusterbildung zu optimieren, sodass das Bildsegmentierungsmodell (140) dazu ausgelegt ist, um einen defekten Objektbereich aus einem Hintergrund in einem anomalen Bild zu segmentieren.

9. Verfahren nach einem der Ansprüche 1 bis 8, wobei das Trainieren des Bildsegmentierungsmodells (140) umfasst:
Optimieren der Cluster-Labels von Pixeln in dem Weiterleitungsprozess durch:
Extrahieren einer Merkmalsdarstellung (204) aus einem Eingabebild unter Verwendung des Codierernetzwerks (114), wobei jedes Pixel des Eingabebildes durch einen Merkmalsvektor (xₙ) dargestellt wird,
Anwenden eines Klassifizierungsmodells auf die extrahierten Merkmalsvektoren (xₙ), um eine pixelweise Antwortkarte zu erzeugen,
Berechnen eines Cluster-Labels für jedes Pixel basierend auf der pixelweisen Antwortkarte, und
Verwenden der Cluster-Labels und der pixelweisen Antwortkarte, um den Segmentierungsfehler (154) zu berechnen, und
Rückausbreiten des Segmentierungsfehlers (154), um Parameter des Codierernetzwerks (114) und des Klassifizierungsmodells zu aktualisieren.

10. Verfahren nach einem der Ansprüche 1 bis 9, wobei der Few-Shot-Lernprozess umfasst:
Verwenden der Merkmalsdarstellungen (204) des Unterstützungssatzes, die unter Verwendung des Codierernetzwerks (114) extrahiert wurden, um einen Prototyp von jeder Anomalieklasse in dem Unterstützungssatz als eine mittlere Vektordarstellung von Abtastwerten in dieser Anomalieklasse in einem Einbettungsraum zu berechnen,
Klassifizieren von Abtastungen in dem Abfragesatz basierend auf dem Berechnen von Abständen zu dem Prototyp jeder Anomalienklasse in dem Einbettungsraum und daraus Berechnen des Klassifizierungsfehlers, und
Rückausbreiten des Klassifizierungsfehlers, um Parameter des Codierernetzwerks (114) zu aktualisieren.

11. Computerimplementiertes Verfahren zum Durchführen einer visuellen Qualitätsprüfung von Teilen, die in einem Fertigungsprozess hergestellt wurden, umfassend:
Trainieren eines tiefenlernbasierten Bildverarbeitungssystems (200) durch ein Verfahren nach einem der Ansprüche 1 bis 10,
Aufnehmen eines Bildes eines zu prüfenden gefertigten Teils,
Eingeben des aufgenommenen Bildes in das Codierernetzwerk (114), um eine Merkmalsdarstellung (204) des aufgenommenen Bildes zu extrahieren,
Klassifizieren des aufgenommenen Bildes als normal oder anomal basierend auf der Merkmalsdarstellung (204) des aufgenommenen Bildes, und
wenn es anomal ist, Ermitteln einer Anomalieklasse durch ein Einspeisen der Merkmalsdarstellung (204) des aufgenommenen Bildes als eine Abfrage in ein Few-Shot-Framework (220), das auf Einbettungen basiert ist, die unter Verwendung des Codierernetzwerks (114) erlernt wurden.

12. Verfahren nach Anspruch 11, das ferner ein Einspeisen der Merkmalsdarstellung (204) des aufgenommenen Bildes in das Bildsegmentierungsmodell (140) umfasst, um einen defekten Objektbereich in dem aufgenommenen Bild zu segmentieren.

13. Verfahren nach einem der Ansprüche 11 und 12, das ferner ein Anpassen eines Fertigungsprozessparameters basierend auf der Anomalieklasse und/oder einer Ausgabe des Bildsegmentierungsmodells (140) umfasst.

14. Nicht-flüchtiges computerlesbares Speichermedium, in dem Anweisungen codiert sind, die, wenn sie von einem Computersystem verarbeitet werden, das Computersystem dazu auslegen, um das Verfahren nach einem der Ansprüche 1 bis 10 durchzuführen.

15. Computersystem, umfassend:
einen oder mehrere Prozessoren, und
einen nicht-flüchtigen Speicher, in dem Anweisungen gespeichert sind, die durch den einen oder die mehreren Prozessoren ausführbar sind, um ein Verfahren nach einem der Ansprüche 1 bis 10 auszuführen.

## Revendications

1. Procédé mis en œuvre par ordinateur pour entraîner un système de vision par apprentissage profond (200) pour la détection, la localisation, la segmentation non supervisée et la classification conjointes d'anomalies dans des images, comprenant :
l'entrée d'images provenant d'un ensemble de données d'entraînement (112) pour entraîner un autocodeur (110) par rétropropagation d'une perte d'autocodeur (L_{final}) qui inclut une perte d'attention, ce qui encourage un réseau de codeur (114) de l'autocodeur (110) à générer des cartes d'attention maximisant la focalisation sur des régions normales d'images, grâce à quoi, étant donnée une image d'entrée anormale, le réseau de codeur (114) est configuré pour générer une carte d'attention qui localise spatialement une anomalie,
**caractérisé en ce qu'**il comprend l'entraînement non supervisé d'un modèle de segmentation d'image (140) en extrayant des représentations de caractéristiques (204) à l'aide du réseau de codeur (114) à partir d'images dans l'ensemble de données d'entraînement (112), et comme variante en optimisant des étiquettes de grappes de pixels dans un processus avant et en optimisant les représentations de caractéristiques (204) par rétropropagation d'une erreur de segmentation (154), et
l'accord du réseau de codeur (114) dans un processus d'apprentissage avec peu d'exemples pour classifier des anomalies en extrayant des représentations de caractéristiques (204) à l'aide du réseau de codeur (114) à partir d'images anormales dans des ensembles de supports et de requêtes respectifs créés à partir de l'ensemble de données d'entraînement (112), l'utilisation de représentations de caractéristiques d'ensembles de supports (204) pour apprendre des incorporations de classes d'anomalies, et la mise à jour du réseau de codeur (114) sur la base d'une erreur de classification calculée à l'aide de représentations de caractéristiques d'ensembles de requêtes (204).

2. Procédé selon la revendication 1, dans lequel l'autocodeur (110) et le modèle de segmentation d'image (140) sont conjointement entraînés en mettant à jour des paramètres respectifs basés sur la perte d'autocodeur (L_{final}) et l'erreur de segmentation (154) dans des itérations alternées, suivi par l'accord du réseau de codeur (114) dans le processus d'apprentissage avec peu d'exemples pour classifier des anomalies.

3. Procédé selon la revendication 2, comprenant l'entraînement de l'autocodeur (110) sur la base de la perte d'autocodeur (*L_{final}*) pour un certain nombre d'époques d'entraînement préalablement au commencement de l'entraînement conjoint de l'autocodeur (110) et du modèle de segmentation d'image (140).

4. Procédé selon l'une quelconque des revendications 1 à 3, dans lequel l'ensemble de données d'entraînement (112) comprend des étiquettes de niveau image pour des images normales représentant des pièces fabriquées nominales et des images anormales représentant des pièces fabriquées défectueuses.

5. Procédé selon la revendication 4, dans lequel, pour entraîner l'autocodeur (110), les cartes d'attention sont calculées à partir d'une représentation de caractéristiques (204) d'une variable latente (z) générée par le réseau de codeur (114) à partir d'images normales dans l'ensemble de données d'entraînement (112).

6. Procédé selon la revendication 5,
dans lequel l'autocodeur (110) comprend un classificateur binaire (120) connecté au niveau de la sortie de la représentation latente,
dans lequel le calcul des cartes d'attention comprend le calcul de cartes d'attention pour des classes normales et anormales par rétropropagation de gradients à partir d'une prédiction du classificateur binaire (120) à partir des images normales, et
dans lequel la perte d'attention est conçue pour minimiser une zone couverte par la carte d'attention de la classe anormale et simultanément mettre à exécution la carte d'attention de la classe normale pour couvrir une image entière.

7. Procédé selon la revendication 6, dans lequel la perte d'autocodeur (L_{final}) comprend en outre une perte de classification binaire (L_{bce}) calculée à partir d'une prédiction du classificateur binaire (120) pour des images dans l'ensemble de données d'entraînement (112), pour configurer le classificateur binaire (120) pour classifier une image d'entrée comme normale ou anormale.

8. Procédé selon l'une quelconque des revendications 4 à 7, dans lequel le modèle de segmentation d'image (140) est entraîné pour optimiser des étiquettes de grappes de pixels sur la base d'une mise en grappes binaires, de telle sorte que le modèle de segmentation d'image (140) est configuré pour segmenter une zone d'objet défectueuse à partir d'un arrière-plan dans une image anormale.

9. Procédé selon l'une quelconque des revendications 1 à 8, dans lequel l'entraînement du modèle de segmentation d'image (140) comprend :
l'optimisation des étiquettes de grappes de pixels dans le processus avant en :
extrayant une représentation de caractéristiques (204) à partir d'une image d'entrée à l'aide du réseau de codeur (114) où chaque pixel de l'image d'entrée est représenté par un vecteur de caractéristiques (xₙ),
appliquant un modèle de classification aux vecteurs caractéristiques (xₙ) extraits pour générer une carte de réponse de niveau pixel,
calculant une étiquette de grappe pour chaque pixel sur la base d'une carte de réponse de niveau pixel, et
utilisant les étiquettes de grappes et la carte de réponse de niveau pixel pour calculer l'erreur de segmentation (154), et
rétropropageant l'erreur de segmentation (154) pour mettre à jour les paramètres du réseau de codeur (114) et du modèle de classification.

10. Procédé selon l'une quelconque des revendications 1 à 9, dans lequel le processus d'apprentissage avec peu d'exemples comprend :
l'utilisation des représentations de caractéristiques d'ensemble de supports (204) extraites à l'aide du réseau de codeur (114) pour calculer un prototype de chaque classe d'anomalies dans l'ensemble de supports comme représentation vectorielle moyenne d'échantillons dans cette classe d'anomalies dans un espace d'incorporation,
la classification d'échantillons dans l'ensemble de requêtes sur la base de distances de calcul du prototype de chaque classe d'anomalies dans l'espace d'incorporation, et à partir de là le calcul de l'erreur de classification, et
la rétropropagation de l'erreur de classification pour mettre à jour des paramètres du réseau de codeur (114).

11. Procédé mis en œuvre par ordinateur pour réaliser une inspection de qualité visuelle de pièces produites par un processus de fabrication, comprenant :
l'entraînement d'un système de vision par apprentissage profond (200) par un procédé selon l'une quelconque des revendications 1 à 10,
l'acquisition d'une image d'une pièce fabriquée à inspecter,
l'entrée de l'image acquise dans le réseau de codeur (114) pour extraire une représentation de caractéristiques (204) de l'image acquise,
la classification de l'image acquise comme normale ou anormale sur la base de la représentation de caractéristiques (204) de l'image acquise, et
si elle est anormale, la détermination d'une classe d'anomalies en fournissant la représentation de caractéristiques (204) de l'image acquise comme une requête à un cadre d'apprentissage avec peu d'exemples (220) qui est basé sur des incorporations apprises à l'aide du réseau de codeur (114).

12. Procédé selon la revendication 11, comprenant en outre l'étape consistant à fournir la représentation de caractéristiques (204) de l'image acquise au modèle de segmentation d'image (140) pour segmenter une zone d'objet défectueuse dans l'image acquise.

13. Procédé selon l'une quelconque des revendications 11 et 12, comprenant en outre l'ajustement d'un paramètre de processus de fabrication sur la base de la classe d'anomalies et/ou d'une sortie du modèle de segmentation d'image (140).

14. Support de stockage lisible par ordinateur non transitoire codé avec des instructions qui, lorsqu'elles sont traitées par un système informatique, configurent le système informatique pour réaliser le procédé selon l'une quelconque des revendications 1 à 10.

15. Système informatique comprenant :
un ou plusieurs processeurs, et
une mémoire non transitoire stockant des instructions exécutables par les un ou plusieurs processeurs pour effectuer un procédé selon l'une quelconque des revendications 1 à 10.
